# EUROPEAN PATENT SPECIFICATION

(11) **EP 0 513 927 B1**
(45) Date of publication and mention of the grant of the patent: **06.12.1995**
(21) Application number: 92201372.7
(22) Date of filing: 13.05.1992
(51) Int. Cl.: B29C 70/52, B29B 15/14

(54) **Resin-impregnation of fibers**
Harz-Imprägnierung von Fasern
Imprégnation de fibres avec de la résine

(30) Priority: 16.05.1991 US 700824; 16.05.1991 US 700825
(43) Date of publication of application: 19.11.1992
(73) Proprietor: SHELL INTERNATIONALE RESEARCH MAATSCHAPPIJ B.V., 2596 HR Den Haag (NL)
(72) Inventor: Stewart, Steven Lee, Houston, Texas 77095 (US)

(56) References cited:
- DE-A- 3 521 229
- US-A- 4 025 256
- PATENT ABSTRACTS OF JAPAN, unexamined applications, M section, vol. 7, no. 25, February 02, 1983 THE PATENT OFFICE JAPANESE GOVERNMENT

## Description

The present invention relates to a method and apparatus for resin-impregnation of fibres and in particular to the mixture of two reactive resin streams within the entrance of a pultrusion die. The resin streams are mixed alongside fibres being pultruded through the die, the resin streams wetting the fibres.

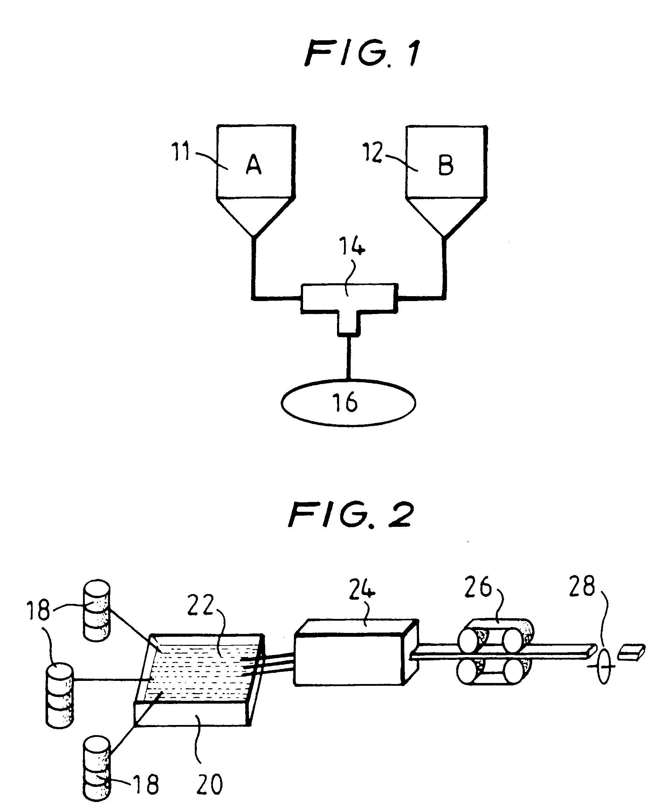

The reaction injection moulding (RIM) process brings together two low viscosity polymer precursors in an impingement mixer (Figure 1) where they begin to react, before travelling on to fill a mould. The low viscosity of the resins reduces the pumping requirements and leads to better resin penetration of the mould and reinforcement. RIM is limited, however, in that it is generally a batch operation and is at a cost disadvantage with continuous processes. Furthermore, it is difficult to produce RIM parts with continuous fibre reinforcement.

The continuous fibre-reinforcement pultrusion process (Figure 2) combines catalyzed resin and fibre reinforcement in a resin tank prior to the resin-soaked fibre being pulled through a heated die by pullers and thereafter cut to a particular length. Generally, the resin tank contains mixed thermosetting resins which undergo some degree of cure in the tank over time. The viscosity of the resins in the tank thereafter increases over time. If the mixed resins thicken sufficiently the machine will stall. These factors have generally limited the pultrusion process to blended resin materials with relatively long pot lives.

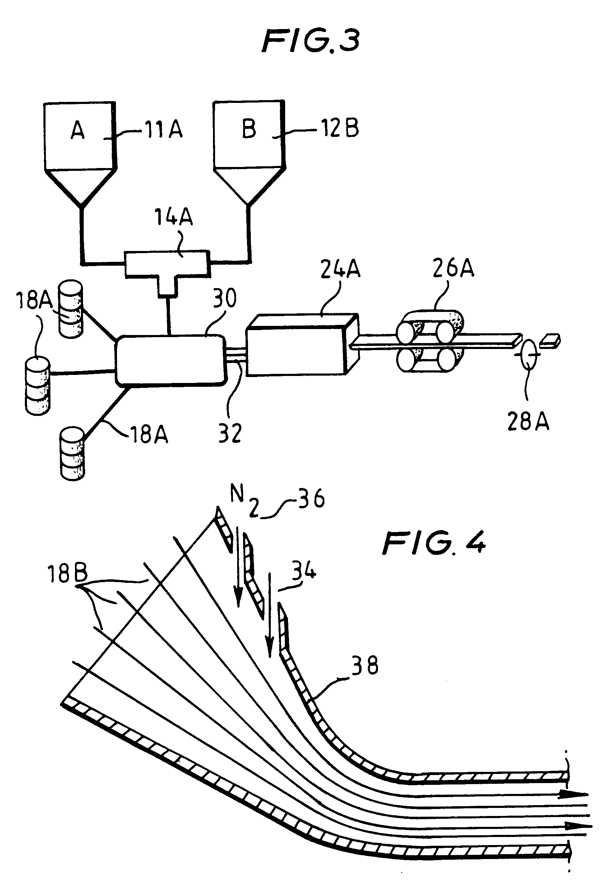

Various proposals have been made to improve the pultrusion process, for example in the article "RIM-pultrusion of Thermoplastic Matrix Composites", authored by Mr H Ishida and Mr G Rotter, presented February 1 through May 1988 at the 43rd Annual Conference of the Composites Institute. One concept is that the resin tank be replaced by the resin impregnation chamber as shown in Figure 3. It is in this chamber that the wet-out of the reinforcement occurs. The authors suggest that the limitations of each individual technique have been avoided such that the pot life restrictions of the resin tank are drastically reduced by the use of materials with short gel times and low viscosities. One resin system for this suggested pultrusion process is disclosed in U.S. Patent 4,735,992, wherein a pre-mixed blend of reactive resin streams feeds a die having a glass fibre core continuously pulled therethrough, as noted in column 3, line 57 through column 4, line 8 of this '992 patent. Note that, once again, the resin is pre-mixed prior to saturation of the glass fibre core.

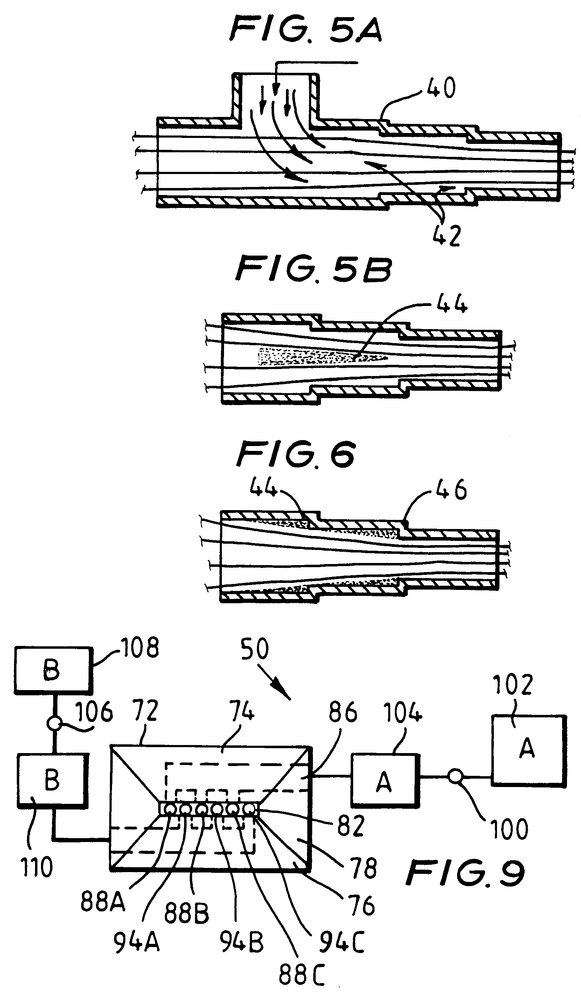

The Ishida et al. article also suggests a possible resin chamber design wherein already mixed resin components are introduced from above to wet fibres entering the chamber at an angle, illustrated in Figure 4, and a more basic design shown in Figure 5 in which the chamber still has the hydrostatic squeezing advantage of the Figure 4 design, but now has dead zones along its length. It can be expected that in these dead zone areas the resin will stagnate and cure prematurely, possibly even leading to the formation of a resin plug (Figure 5A) which would stall the machine. The resin could also cure to possibly form a sheet or funnel about the inner diameter of the wall, so subsequent material would flow more easily, as shown in Figure 6.

These problems derive from the pre-mixing of the two co-reactive resin streams earlier than absolutely necessary, and are reduced by the present invention in which co-reactive resin streams are mixed at the immediate entrance of the impregnation die, with ultrasonic agitation to force the resin quickly into the fibres and thereby compensate for the shortness of the resin/fibre soak time. The resin is not pre-mixed several metres or even cm. upstream of the heated die, but is mixed at the immediate entrance to the die. Resins having extremely short reactivity times may therefore be used, without worry of system plugging.

The invention therefore provides an apparatus for impregnating a fibre with resin, said apparatus comprising:-
i) an impregnation die having an inlet end and an outlet end and having a central duct opening defined therebetween sized to draw at least one resin-impregnated fibre therethrough, said inlet end of said impregnation die having a tapered opening defined by at least one tapered surface convergedly intersecting said central duct opening;
ii) a resin feed head co-operatively positioned within said tapered opening, a portion of said resin feed head spaced from said tapered surface to allow at least one fibre to be drawn therebetween and thereafter into said central duct opening, said resin feed head having a mixing face positioned adjacent said central duct opening, said resin feed head having a first resin flow opening means and a second resin flow opening means defined therethrough, said resin flow opening means defining separate resin flow openings in said mixing face;
iii) means for flowing a first resin stream through said first resin flow opening means and a second resin stream through said second resin flow opening means, said resin streams being co-reactive and hardenable with each other when mixed together, said resin streams discharging through said separate resin flow openings in said mixing face and thereafter mixing at the immediate entrance of the impregnation die, said mixed resin streams impregnating said at least one fibre; and
iv) means for drawing said resin impregnated fibre away from said mixing face before said mixed resin saturating said fibre hardens;
   characterised in that an
v) ultrasonic driver means is operatively coupled to said resin feed head and capable of vibrating said resin feed head.

The invention also provides a method of resin-impregnating a fibre said method comprising the steps of providing:
an impregnation die having an inlet end and an outlet end and having a central duct opening defined therebetween sized to draw at least one resin-impregnated fibre therethrough, said inlet end of said impregnation die having a tapered opening defined by at least one tapered surface convergedly intersecting said central duct opening,
a resin feed head co-operatively positioned within said tapered opening, a portion of said resin feed head spaced from said tapered surface to allow at least one fibre to be drawn therebetween the thereafter into said central duct opening, said resin feed head having a mixing face positioned adjacent said central duct opening, said resin feed head having a first resin flow opening means and a second resin flow opening means defined therethrough, said resin flow opening means defining separate resin flow openings in said mixing face, and drawing said fibre between said resin feed head and said tapered surface of said impregnation die into said central duct opening; flowing a first resin stream through said first resin flow opening means and a second resin stream through said second resin flow opening means, said resin streams being co-reactive and hardenable with each other when mixed together, at the immediate entrance of the impregnation die, said resin streams discharging through said separate resin flow openings in said mixing face and thereafter mixing, said mixed resin streams impregnating said at least one fibre with a mixed resin; and drawing said resin impregnated fibre away from said mixing face before said mixed resin saturating said fibre hardens, characterised by providing ultrasonic driver means operatively coupled to said resin feed head and capable of vibrating said resin feed head, and energizing said ultrasonic driver means to vibrate said resin feed head.

The impregnation die has a tapered opening which converges inwardly and intersects a central duct opening defined through the die. A separate resin feed head is co-operatively positioned within the tapered opening. The fibre reinforcement material is drawn between the resin feed head and through the central duct opening.

The resin feed head has a mixing face which is positioned adjacent the central duct opening. Flow openings included within the resin feed head deliver and direct two separate co-reactive resin streams to the mixing face. The resin streams mix together adjacent the mixing face and/or in the fibre reinforcement material as the material passes by the mixing face. An ultrasonic driver is coupled to the resin feed head and vibrates the head so as to speed the rate of resin/fibre wetout.

In operation the fibrous material is first drawn between the resin feed head and the tapered surface of the impregnation die and thereafter fed into the central duct opening. The ultrasonic driver means coupled to the resin feed head is thereafter energized. Two separate resin streams thereafter flow through openings in the resin feed head and discharge from separate flow openings in the mixing face of the feed head, the mixed resin streams impregnating the fibrous material located adjacent the mixing face. The resin impregnated fibrous material is thereafter drawn away from the mixing face before the mixed resin saturating the fibre hardens.

It is further remarked that DE-A-3,521,229 discloses a method for continuously manufacturing of semi-manufactured articles comprising the step of feeding a strand of glass fibres to a bath filled with liquid synthetic material. In this bath ultrasound is applied to the fibres and the synthetic material to obtain a good impregnation of the fibres.

However, the problems of stagnation and prematurely curing of resins in a pultrusion die have not been disclosed or suggested at all.

In the accompanying drawings, Figures 1-6 illustrate various features of known pultrusion apparatuses, and Figures 7, 8 and 9 illustrate forms of apparatus according to the present invention.

Figure 1 is a pictorial diagrammatic view of a conventional reaction injection moulding process.

Figure 2 is a pictorial diagrammatic representation of a conventional pultrusion process.

Figure 3 is a pictorial diagrammatic view of a conventional RIM-pultrusion process.

Figure 4 shows a schematic representation in a side view and cross section of fibrous material being saturated by an already-mixed resin system.

Figure 5 shows a schematic representation in cross section of fibrous material being impregnated with resin in a resin chamber.

Figure 5A shows a schematic representation in a side view and cross section of the resin chamber plugged with a wedge of hardened resin.

Figure 6 shows a schematic representation in a side view and partial cross section of hardened resin formed about the inner walls of a resin chamber.

Figure 7 shows a schematic representation in a top view in cross section of a resin feed head inserted into an impregnation die.

Figure 8 shows a schematic representation in a side view in cross section of the resin feed head inserted within the impregnation die.

Figure 9 shows a schematic representation in a front view of the resin feed head.

Referring now to prior art Figures 1-6, Figure 1 shows a typical reaction injection molding apparatus wherein two separate co-reactive resins held in tank A 11 and Tank B 12, separately, thereafter are mixed at mix head 14 prior to their infusion in mold 16.

Elements of the pultrusion process are represented in Figure 2. Fibers 18 are feed through resin tank 20 containing pre-mixed resin 22, before the fibers are drawn through heated die 24 by pullers 26, prior to being cut to specific lengths by saw 28.

The RIM-pultrusion equipment shown in Figure 3 is a combination of the equipment shown in the two previous Figures 1 and 2. A resin held in tank A 11A and a resin held in tank B 12B are combined in mix head 14A and thereafter injected into resin chamber 30, to saturate the fibers 18A. The fibers are drawn through heated die 24A by pullers 26A and thereafter cut by saw 28A. The resin-wetted fiber bundle 32 exiting resin chamber 30 is exposed to atmospheric conditions, and the resin incorporated in the fibers must have a sufficient cure time such that the fibers/resin structure does not bind within the heated die 24A.

Another way of combining the already mixed resin 34 with the fibers 18B is shown in Figure 4 wherein the fibers remain spaced apart sufficiently for the resin to flow around and into the fibers prior to the fiber/resin mixture being pulled through wetting die 38. A source of nitrogen 36 may be supplied at the entrance to the wetting die 38.

Referring now to Figure 5 a wetting die 40 can be seen to include dead zones 42 where excess resin may tend to accumulate and harden. As shown in Figure 5A a plug 44 of hardened resin may be formed in the central dead zone 42 and thereafter stall the fiber drawing process. As shown in Figure 6 the hardened resin deposit 44 may form adjacent the wall 46 and either aid the fibers in passage past the sharp edges of the wall 46, or continue to build up and eventually cause the process to stall.

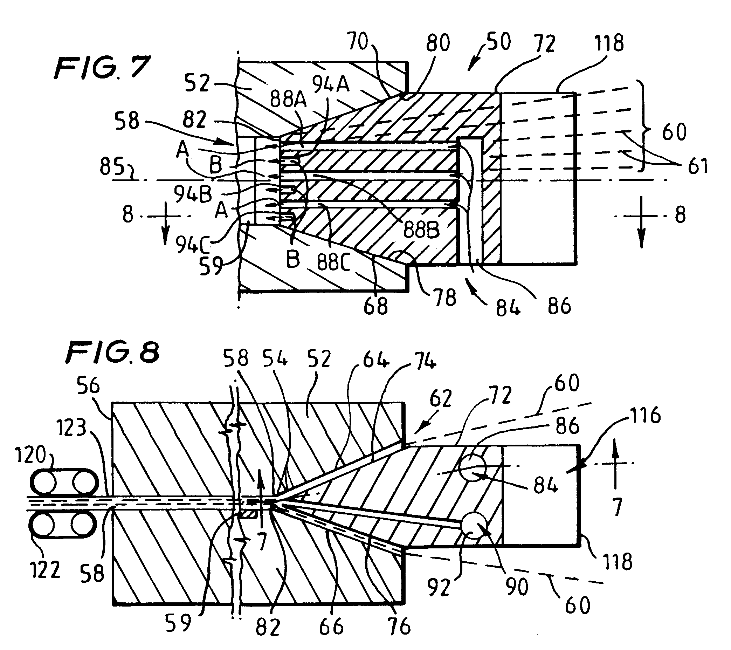

Referring now to Figures 7, 8 and 9, which illustrate the present invention, the apparatus 50 includes an impregnation die 52 having an inlet end 54 and an outlet end 56 and a central duct opening 58 defined between the inlet and outlet end. The central duct opening as is well known in the pultrusion art is sized to draw at least one resin impregnated fiber 60 therethrough. The term fiber 60 should be taken in its generic sense, to include all types of fiber reinforcement commonly used in the fabrication of pultruded fiber reinforced plastic articles. "Fiber" 60 can therefore include a single fiber, a plurality of fibers, continuous strand mat, uni-directional cloth, woven rovings, or any other material used to reinforce hardenable resin systems.

Several fiber approach paths 61 to the central duct opening are shown in Figure 7, though all of the paths are not shown to preserve the visual clarity of the underlying structure.

The inlet end of the impregnation die can be seen to have a tapered opening 62 (Figure 8) defined by at least one tapered surface which convergedly intersects the central duct opening 58. In a preferred embodiment, the tapered opening 62 is defined by the impregnation die upper tapered surface 64, the impregnation die lower tapered surface 66, the impregnation die side surface A 68 and the impregnation die side surface B 70. It will be understood that many other combinations of conical, curvilinear, or straight surfaces may be used to form the tapered opening leading to the central duct opening 58.

The impregnation die may also include at least one heater element 59 that may be used to supply thermal energy to the resin-saturated fiber as is well known to the art.

Apparatus 50 can also be seen to include a resin feed head 72 which is cooperatively positioned within the tapered opening 62. As can be seen in Figure 8 a portion of the resin feed head is spaced from the impregnation die upper tapered surface 64 and lower tapered surface 66 so as to allow the fiber 60 to be drawn therebetween, and thereafter into the central duct opening 58. Dividing the fibers in this manner prior to their convergence within the central duct opening 58 aids in the resin-impregnation of the fibers, as explained more fully below.

The resin feed head 72 can be seen to include resin feed head upper tapered surface 74, resin feed head lower tapered surface 76, resin feed head side surface A 78, and resin feed head side surface B 80. The resin feed head surfaces 74, 76, 78, 80, of course, may be shaped in any manner to allow the resin feed head to fit within tapered opening 62. In a preferred embodiment, the side surfaces 78, 80 are sized to operatively engage the cooperating surfaces 68, 70 of the impregnation die, since no fibers 60 need be drawn past the side surfaces of the resin feed head and impregnation die. Sealing the side surfaces with one another can also stabilizes the resin feed head 72 relative to the impregnation die. Side surfaces may include any elastomeric sealing means well known to the art to accomplish this purpose. In the alternative, the resin feed head side surfaces of course may be spaced from the impregnation die.

The resin feed head 72 can be seen to have a mixing face 82 positioned adjacent the central duct opening. In the preferred embodiment the mixing face 82 is positioned perpendicular to a central longitudinal axis 85 defined axially through the central duct opening and the resin feed head 72. It will be understood that the mixing face 82 in an alternative embodiment may be positioned on the other tapered surfaces of the resin feed head, or on the tapered surfaces of the impregnation die, so long as the resin discharged from the face mixes and distributes evenly within the fiber 60 being drawn through the impregnation die.

The resin feed head 72 can be seen to have a first resin flow opening means 84 such as a resin A channel 86 which forms a common resin supply header within the resin feed head, and thereafter a distribution network of smaller openings which allow the resin to flow down to the mixing face. The resin A channel 86 ends at the mixing face in resin flow openings 88A, 88B, 88C. These openings for visual clarity all have arrows labeled "A" in Figure 7, and are simply labeled "A" in Figure 9.

In a similar manner the resin feed head includes a second resin flow opening means 90 such as resin B channel 92 terminating at the mixing face in resin flow openings 94A, 94B, and 94C. For visual clarity, these openings are shown in Figure 7 with arrows labeled "B" discharging therefrom, and labeled in Figure 9 as openings "B". As can be seen the separate resin flow opening means 84, 90 define separate resin flow openings 88A, B, C, and 94A, B, C in the mixing face. In this manner, the resins supplied to the separate resin channels 86, 92 are maintained separate and do not mix until they at least reach the mixing face.

Apparatus 50 can also be seen to include means for flowing a first resin stream 100 (Figure 9) through said first resin flow opening means, such as by use of resin A holding tank 102 coupled with pump A 104 which discharges into the resin A channel 86. In a similar manner a second resin stream 106 may be pumped from tank 108 by pump B 110 into resin B channel 92. The resin streams 100, 106 thereafter discharge through the separate resin flow openings in the mixing face and mix, the mixed resin streams 106, 100 impregnating the fibers 60 passing thereby.

The first resin stream 100 would discharge through openings 88A, B, C, and the second resin stream 106 would discharge through openings 94A, B, C. Refer for example to Figure 9.

The apparatus 50 can also be seen to include an ultrasonic driver means 116 such as an ultrasonic driver device 118 operatively coupled to the resin feed head and being capable of vibrating the resin feed head. A suitable ultrasonic driver is an ultrasonic stephorn, such as those available from Branson Sonic Power Company. In a preferred embodiment this ultrasonic driver would vibrate from about 15 kHz to about 25 kHz.

Use of the ultrasonic driver enables effective injection of the mixed resin about the fibers as they are being pulled into the central duct opening 58 of the impregnation die. Merely pulling the fiber 60 past a non-vibrating resin feed head would possibly lead to resin dry spots in the fibers 60, with the formation of resin-poor voids in the finished product. Lack of this external vibration supplied by the ultrasonic driver would also not allow the resin streams to mix thoroughly and thereby co-react with one another, causing the final product to contain an uneven distribution of co-reacted resin.

The apparatus 50 can also be seen to include means for drawing the resin impregnated fiber away from the mixing face before the mixed resin saturating the fiber hardens, such as puller A 120 and puller B 122 as is well known to the art.

Referring more specifically now to Figure 9 it can be seen that the separate resin flow openings may be defined in the mixing face so as to be spaced equally across the length of the mixing face. Additionally, the resin flow openings are defined in a preferred embodiment in an alternating manner across the length of the mixing face. In other words, a resin flow opening discharging resin stream A would be located adjacent a resin flow opening discharging resin B. In a preferred embodiment, the separate resin flow openings are oriented to discharge the resin streams 100, 106 parallel to the central longitudinal axis of the central duct opening, though it should be well understood that this discharge orientation may be varied depending on the location and type of fiber 60 being fed past the resin feed head into the impregnation die, or the type of resin being used.

In operation, the fiber 60 would initially be drawn between the resin feed head and the tapered surface of the impregnation die into the central duct opening. The ultrasonic driver means would thereafter be energized to vibrate the resin feed head. A first resin stream 100 would flow through the first resin flow opening means and a second resin stream 106 would thereafter flow through the second resin flow opening means, the resin streams being co-reactive and hardenable with each other when mixed together. The resin streams would discharge through the separate resin flow openings in the mixing face and thereafter mix, the mixed resin streams impregnating the fibers with mixed resin. The resin impregnated fibers would be drawn away from the mixing face before the mixed resin saturating the fiber hardened.

Depending on the geometries of the mixing face relative to the central duct opening, and the orientation of the fiber relative to the intersection of the mixing face with the central duct opening, the resin streams could mix and react adjacent the mixing face and thereafter impregnate the fiber, or the resin streams could mix and react adjacent the mixing face and adjacent the fiber 60 and thereafter impregnate the fiber. Alternatively, the resin streams could mix and react adjacent the fiber and thereafter impregnate the fiber. It is therefore possible to tailor the dynamics of the process such that various resin systems may be used, along with various fiber systems, to produce a pultruded article.

Once the resin is mixed with the fiber the normal pultrusion process parameters for a particular resin system may be used as a guide in establishing the remaining process parameters. For example, the mixed resin would most probably be allowed to harden before the resin impregnated fiber is drawn from the outlet end of the impregnation die. The heater elements may be energized to supply a certain amount of thermal energy to the resin impregnated fiber material as it passes through the impregnation die, as is well known to the art.

Alternatively, one may only partially cure the resin to provide a preimpregnated ("prepreg") product that subsequently is reformed and cured in another molding operation. An example of this would be to pultrude a prepreg I-beam and place this on an uncured prepreg panel followed by a thermal curing cycle to both cure and bond the two articles together (co-curing).

It should be well recognized that other ultrasonic drivers may be located in other locations about the apparatus 50. The ultrasonic driver, along with the mixing action of the resin streams, will provide more uniform impregnation of the reinforcement and assist in air removal from the reinforcement.

An additional benefit of the ultrasonic driver is the ability to include pigments and fillers, both mineral and organic, in the resin system and uniformly distribute these pigments and fillers throughout the fibers without the normal filtration of these solids on the fiber bundle surfaces.

It should be well understood that the resin feed head/impregnation die combination may be used to produce pultrusions having many various cross-sections besides the rectangular pultrusion 123 shown in Figure 8. Pultrusions having circular cross-sections made be fabricated according to the teachings of this invention, wherein the inner mandrel may comprise the ultrasonically-driven resin delivery apparatus. Multiple ultrasonic drivers/resin feed heads may be used to fabricate complex cross-sections having I, T, J, and L beams and any other combinations thereof.

The resin streams may comprise components normally used in the reaction injection molding process, or may comprise any other resin system wherein the resin streams are co-reactive and hardenable with each other when mixed together. In one preferred embodiment of the invention, the first resin stream 100 may be selected to be a polyisocyanate, containing an average of two or more reactive isocyanate groups per molecule, and the second stream 106 may be selected to be a polyol or polyamine, capable of reacting with the polyisocyanate, containing an average of two or more reactive hydroxyl or amine groups per molecule.

Either or both resin streams may contain a reaction catalyst, capable of modifying the reaction rate or reaction path of the combined resin streams.

These resins constitute what is known in the industry as a polyurethane system, so-called because of the urethane linkages formed during the curing reactions. Chemically similiar resins are the polycarbamates and polyisocyanurates. A typical resin of this type is Dow Chemical Company's SPECTRIM MM 310, a polycarbamate system consisting of; SPECTRIM MM 310-A, a polyisocyanurate resin; SPECTRIM MM 310-B, a polyol resin; and SPECTRIM MM 310-C, a reaction catalyst (typically added to the polyol at 0.10% by weight).

The choice of the resin systems will vary depending on the size and shape of the part to be formed, as well as the chemical and mechanical properties required in the application of the final part. The polyurethanes, polycarbamates, and the polyisocyanurates provide fast reactions and thus high production rates, but with lower stiffness and other mechanical properties than the polyester and epoxy resins. The polyester and epoxy resins generally provide higher mechanical properties but are generally slower reacting than the polyurethanes, polycarbamates, and polyisocyanurates.

It should be well understood that many other reactive resin systems may be used to accomplish the same result.

## Claims

1. An apparatus for impregnating a fibre with resin, said apparatus comprising:-
i) an impregnation die (52) having an inlet end (54) and an outlet end (56) and having a central duct opening (58) defined therebetween sized to draw at least one resin-impregnated fibre (60) therethrough, said inlet end of said impregnation die having a tapered opening (62) defined by at least one tapered surface convergedly intersecting said central duct opening;
ii) a resin feed head (72) co-operatively positioned within said tapered opening, a portion of said resin feed head spaced from said tapered surface to allow at least one fibre to be drawn therebetween and thereafter into said central duct opening, said resin feed head having a mixing face (82), said resin feed head having a first resin flow opening means (84) and a second resin flow opening means (90) defined therethrough, said resin flow opening means defining separate resin flow openings in said mixing face;
iii) means for flowing a first resin stream (100) through said first resin flow opening means and a second resin stream through said second resin flow opening means, said resin streams being co-reactive and hardenable with each other when mixed together, said resin streams discharging through said separate resin flow openings in said mixing face and thereafter mixing at the immediate entrance of the impregnation die (52), said mixed resin streams impregnating said at least one fibre; and
iv) means for drawing said resin impregnated fibre away from said mixing face before said mixed resin saturating said fibre hardens;
characterised in that an
v) ultrasonic driver means (116) is operatively coupled to said resin feed head and capable of vibrating said resin feed head and in that the said mixing face (82) is positioned adjacent to said central duct opening.

2. The apparatus as claimed in claim 1, characterised in that said mixing face (82) is positioned perpendicular to a central longitudinal axis (85) defined axially through said central duct opening.

3. A method of resin-impregnating a fiber by means of an apparatus as claimed in claims 1 or 2, which comprises drawing said fiber between said resin feed head and said tapered surface of said impregnation die into said central duct opening; flowing a first resin stream through said first resin flow opening means and a second resin stream through said second resin flow opening means, said resin stream being co-reactive and hardenable with each other when mixed together, said resin streams discharging through said separate resin flow openings in said mixing face and thereafter mixing, said mixed resin streams impregnating said at least one fiber with a mixed resin; and drawing said resin impregnated fiber away from said mixing face before said mixed resin saturating said fiber hardens, characterised by providing ultrasonic driver means (116) operatively coupled to said resin feed head and capable of vibrating said resin feed head, and energizing said ultrasonic driver means to vibrate said resin feed head.

4. The method as claimed in claim 3 characterised in that said resin streams mix and react adjacent said mixing face and thereafter impregnate said fibre.

5. The method as claimed in claim 3 or 4, characterised by the step of including, subsequent to the step of drawing said resin impregnated fibre away from said mixing face before said mixed resin saturating said fibre hardens, the step of allowing said mixed resin to harden before said resin impregnated fibre is drawn from said outlet end of said impregnation die.

6. The method as claimed in any one of claims 3 to 5, characterised in that the ultrasonic driver is operated at a frequency from 15 to 25 kHz.

7. The method as claimed in any one of claims 3 to 6, characterised in that said first resin stream is a polyisocyanate resin and said second resin stream is a catalyzed polyol resin.

## Patentansprüche

1. Vorrichtung zum Tränken einer Faser mit Harz, welche Vorrichtung aufweist:
i) eine Imprägnierungsdüse (52) mit einem Einlaßende (54) und einem Auslaßende (56) und einer dazwischen ausgebildeten zentralen Durchführungsöffnung (58), die eine entsprechende Größe für das Hindurchziehen zumindest einer harzgetränkten Faser (60) hat, wobei das Einlaßende der Imprägnierungsdüse eine verjüngte Öffnung (62) aufweist, die von zumindest einer verjüngten Oberfläche gebildet ist, welche die zentrale Durchführungsoffnung konvergierend schneidet;
ii) einen Harzzuführungskopf (72), der im Inneren der verjüngten Öffnung angeordnet ist und mit dieser zusammenwirkt, wobei ein Abschnitt des Harzzuführungskopfes in einem Abstand von der verjüngten Oberfläche liegt, um das Einziehen zumindest einer Faser dazwischen und anschließend in die zentrale Durchführungsöffnung hinein zu ermöglichen, wobei der Harzzuführungskopf eine Mischseite (82) aufweist, der Harzzuführungskopf erste Harzströmungsöffnungsmittel (84) und zweite Harzströmungsöffnungsmittel (90) aufweist, die durch ihn hindurch ausgebildet sind, und die Harzströmungsöffnungsmittel getrennte Harzströmungsöffnungen in der Mischseite bilden;
iii) Mittel zum Strömungsleiten eines ersten Harzstromes (100) durch die ersten Harzströmungsöffnungsmittel und eines zweiten Harzstromes durch die zweiten Harzströmungsöffnungsmittel, wobei die Harzströme miteinander co-reaktionsfähig und aushärtbar sind, wenn sie vermischt werden, wobei die durch die getrennten Harzströmungsöffnungen in der Mischseite abgegebenen Harzströme sich anschließend am unmittelbaren Eingang der Imprägnierungsdüse (52) vermischen, wobei die vermischten Harzströme die zumindest eine Faser durchtränken; und
iv) Mittel zum Abziehen der harzgetränkten Faser von der Mischseite, bevor das die Faser tränkende vermischte Harz aushärtet;
dadurch gekennzeichnet, daß
v) Ultraschallantriebsmittel (116) betriebsmäßig an den Harzzuführungskopf angeschlossen sind und in der Lage sind, den Harzzuführungskopf in Vibration zu versetzen, und daß die Mischseite (82) der zentralen Durchführungsöffnung benachbart liegt.

2. Vorrichtung nach Abspruch 1, dadurch gekennzeichnet, daß die Mischseite (82) senkrecht zu einer zentralen Längsachse (85) liegt, welche axial durch die zentrale Durchführungsöffnung hindurch definiert ist.

3. Verfahren zum Harztränken einer Faser mit Hilfe einer Vorrichtung nach Anspruch 1 oder 2, welches Verfahren das Durchziehen der Faser zwischen dem Harzzuführungskopf und der verjüngten Oberfläche der Imprägnierungsdüse hinein in die zentrale Durchführungsöffnung umfaßt; das Strömungsleiten eines ersten Harzstromes durch die ersten Harzströmungsöffnungsmittel und eines zweiten Harzstromes durch die zweiten Harzströmungsöffnungsmittel, wobei die beiden Harzströme miteinander co-reaktionsfähig und aushärtbar sind, wenn sie vermischt werden, wobei die Harzströme durch die getrennten Harzströmungsöffnungen in der Mischseite abgegeben werden und sich anschließend vermischen, wobei die vermischten Harzströme die zumindest eine Faser mit vermischtem Harz durchtränken; und das Abziehen der harzgetränkten Faser von der Mischseite, bevor das die Faser tränkende vermischte Harz aushärtet, gekennzeichnet durch das Vorsehen von Ultraschallantriebsmitteln (116), die betriebsmäßig an den Harzzuführungskopf angeschlossen sind und in der Lage sind, den Harzzuführungskopf in Vibration zu versetzen, und durch das Einschalten der Ultraschallantriebsmittel, um den Harzzuführungskopf in Vibration zu versetzen.

4. Verfahren nach Anspruch 3, dadurch gekennzeichnet, daß sich die Harzströme neben der Mischseite vermischen und miteinander reagieren und anschließend die Faser durchtränken.

5. Verfahren nach Anspruch 3 oder 4, gekennzeichnet durch den Schritt des Einbeziehens - im Anschluß an den Schritt des Abziehens der harzgetränkten Faser von der Mischseite bevor das die Faser tränkende vermischte Harz aushärtet - des Schrittes des Zulassens des Aushärtens des vermischten Harzes, bevor die harzgetränkte Faser aus dem Auslaßende der Imprägnierungsdüse abgezogen wird.

6. Verfahren nach einem der Ansprüche 3 bis 5, dadurch gekennzeichnet, daß der Ultraschallantrieb mit einer Frequenz von 15 bis 25 kHz betrieben wird.

7. Verfahren nach einem der Ansprüche 3 bis 6, dadurch gekennzeichnet, daß der erste Harzstrom ein Polyisocyanatharz und der zweite Harzstrom ein mit einem Katalysator versehenes Polyolharz ist.

## Revendications

1. Appareil pour imprégner une fibre de résine, lequel appareil comprend :
i) une filière d'imprégnation (52) possédant une extrémité d'entrée (54) et une extrémité de sortie (56) et un orifice de conduit central défini entre elles, calibré pour tirer au moins une fibre imprégnée (60) de résine à travers la filière, ladite extrémité d'entrée de ladite filière d'imprégnation possédant un orifice tronconique (62) défini par au moins une surface tronconique intersectant de manière convergente ledit orifice de conduit central;
ii) une tête d'alimentation en résine (72) logée de manière coopérative dans l'orifice tronconique précité, une partie de ladite tête d'alimentation en résine espacée de ladite surface tronconique pour permettre à au moins une fibre d'être tirée à travers elle et ensuite à travers ledit orifice de conduit central, ladite tête d'alimentation en résine possédant une face mélangeuse ou de mélange (82), ladite tête d'alimentation en résine comportant un premier moyen d'orifice d'écoulement de résine (84) et un second moyen d'orifice d'écoulement de résine (90) définis à travers elle, ledit moyen d'orifice d'écoulement de résine délimitant des orifices d'écoulement de résine séparés dans ladite face mélangeuse ou de mélange;
iii) un dispositif pour faire s'écouler un premier courant de résine (100) à travers ledit premier moyen d'orifice d'écoulement de résine et un second courant de résine à travers ledit second moyen d'orifice d'écoulement de résine, lesdits courants de résine étant coréactifs et mutuellement durcissables lorsqu'ils sont mélangés l'un à l'autre, lesdits courants de résine se déchargeant à travers lesdits orifices d'écoulement de résine séparés dans ladite face mélangeuse et se mélangeant ensuite à l'entrée immédiate de la filière d'imprégnation (52), lesdits courants de résine mélangés imprégnant l'au moins une fibre précitée, et
iv) un dispositif pour tirer ladite fibre imprégnée de résine à l'écart de ladite face mélangeuse ou de mélange avant que ladite résine mixte saturant ladite fibre ne durcisse;
caractérisé en ce que
v) un dispositif d'entraînement à ultrasons (116) est opérativement couplé à ladite tête d'alimentation en résine et est capable de faire vibrer ladite tête d'alimentation en résine et dans lequel ladite face mélangeuse (82) est située au voisinage dudit orifice de conduit central.

2. Appareil suivant la revendication 1, caractérisé en ce que la face mélangeuse (82) précitée est mise en place perpendiculairement à un axe longitudinal central (85) défini axialement à travers ledit orifice de conduit central.

3. Procédé pour imprégner une fibre de résine à l'aide d'un appareil suivant l'une quelconque des revendications 1 et 2, selon lequel on tire ladite fibre entre ladite tête d'alimentation en résine et ladite surface tronconique de ladite filière d'imprégnation dans ledit orifice de conduit central; on fait s'écouler un premier courant de résine à travers ledit premier moyen d'orifice d'écoulement de résine et un second courant de résine à travers ledit second moyen d'orifice d'écoulement de résine, lesdits courants de résine étant coréactifs et mutuellement durcissables lorsqu'ils sont mélangés l'un à l'autre, lesdits courants de résine se déchargeant à travers lesdits orifices d'écoulement de résine séparés dans ladite face mélangeuse ou de mélange et se mélangeant ensuite, lesdits courants de résine mélangés imprégnant l'au moins une fibre précitée d'une résine mixte; et on tire ladite fibre imprégnée de résine à l'écart de ladite face mélangeuse ou de mélange avant que ladite résine mixte saturant ladite fibre ne durcisse, caractérisé en ce que l'on prévoit un dispositif d'entraînement à ultrasons (116) opérativement couplé à ladite tête d'alimentation en résine et capable de faire vibrer ladite tête d'alimentation en résine et on excite ledit dispositif d'entraînement à ultrasons pour faire vibrer ladite tête d'alimentation en résine.

4. Procédé suivant la revendication 3, caractérisé en ce que lesdits courants de résine se mélangent et réagissent au voisinage de ladite face mélangeuse et imprègnent ensuite ladite fibre.

5. Procédé suivant la revendication 3 ou 4, caractérisé en ce que, après avoir tiré ladite fibre imprégnée de résine à l'écart de ladite face mélangeuse avant que ladite résine mixte saturant ladite fibre durcisse, on laisse ladite résine mixte durcir avant de tirer ladite fibre imprégnée de résine de ladite extrémité de sortie de la filière d'imprégnation concernée.

6. Procédé suivant l'une quelconque des revendications 3 à 5, caractérisé en ce que le dispositif d'entraînement à ultrasons est amené à fonctionner à une fréquence de 15 à 25 kHz.

7. Procédé suivant l'une quelconque des revendications 3 à 6, caractérisé en ce que le premier courant de résine est constitué d'une résine de polyisocyanate et le second courant de résine est constitué d'une résine de polyol catalysée.
